# EUROPÄISCHE PATENTANMELDUNG

(11) **EP 2 876 512 A1**
(43) Veröffentlichungstag der Anmeldung: **27.05.2015**
(21) Anmeldenummer: 13194228.6
(22) Anmeldetag: 25.11.2013
(51) Int. Cl.: G05B 17/02, G05B 19/042

(54) **Verfahren zur automatischen Verbindung von Komponenten eines Modells eines technischen Systems**

(71) Anmelder: dSPACE digital signal processing and control engineering GmbH, 33102 Paderborn (DE)
(72) Erfinder: Franzen, Dr. Ortwin Ludger, 33175 Bad Lippspringe (DE)

(57) **Zusammenfassung**

Verfahren zum automatischen Verbinden von Modellkomponenten eines Modells eines technischen Systems auf einem Computer mit einer Anzeige, wobei das Modell eine erste Modellkomponente und eine zweite Modellkomponente aufweist. Die erste Modellkomponente und die zweite Modellkomponente weisen jeweils mindestens ein Hierarchieelement auf, wobei ein Hierarchieelement kein Hierarchieelement oder ein Hierarchieelement oder mehrere Hierarchieelemente enthält. Ein Hierarchieelement weist keinen Port oder einen Port oder mehrere Ports auf, wobei ein Hierarchieelement und ein Port einen Bezeichner aufweisen. Eine Verbindung zwischen zwei Ports stellt eine Zuordnung im technischen System dar. Durch eine grafische Benutzeraktion wird eine erste Menge von Hierarchieelementen und / oder Ports und eine zweite Menge von Hierarchieelementen und / oder Ports ausgewählt, wobei für einen ersten Port der ersten Menge und einen zweiten Port der zweiten Menge eine mögliche Zuordnung geprüft wird. Eine mögliche Zuordnung ist dann gegeben, wenn für den ersten Port und den zweiten Port, sowie entsprechend der Hierarchie aufsteigend von dem ersten Port und dem zweiten Port aus die Bezeichner der Hierarchieelemente, die dem ersten Port und dem zweiten Port übergeordnet sind, jeweils auf einer ausgehend vom Port gleichen Hierarchiestufe bis zu einer vorgebbaren Anzahl von Hierarchiestufen übereinstimmen oder gemäß einer vorgegebenen Regel als übereinstimmend bewertet werden. Bei Vorliegen einer möglichen Zuordnung wird der erste Port der ersten Menge automatisch mit dem zweiten Port der zweiten Menge verbunden.

## Beschreibung

Die Erfindung betrifft ein Verfahren zum automatischen Verbinden von Modellkomponenten eines Modells eines technischen Systems auf einem Computer mit einer Anzeige, wobei das Modell wenigstens die folgenden Elemente aufweist: Das Modell weist mindestens eine erste Modellkomponente und eine zweite Modellkomponente auf, wobei die erste Modellkomponente und die zweite Modellkomponente jeweils mindestens ein Hierarchieelement aufweisen. Ein Hierarchieelement enthält kein Hierarchieelement oder ein Hierarchieelement oder mehrere Hierarchieelemente, wobei ein Hierarchieelement keinen Port, einen Port oder mehrere Ports aufweist. Ein Hierarchieelement und / oder ein Port weisen einen Bezeichner auf.

Eine Verbindung zwischen einem ersten Port und einem zweiten Port stellt eine Zuordnung im technischen System dar. Durch eine grafische Benutzeraktion ist eine erste Menge von Hierarchieelementen und / oder Ports und eine zweite Menge von Hierarchieelementen und / oder Ports auswählbar.

Derartige Verfahren zum Verbinden von Modellkomponenten eines Modells eines technischen Systems sind in grafischen Programmierumgebungen, Modellierungsumgebungen, Konfigurationseinrichtungen oder Modellintegrationseinrichtungen im Stand der Technik seit einiger Zeit bekannt, wobei es sich bei dem Modell eines technischen Systems üblicherweise um eine blockbasierte oder baumartige abstrakte grafische Darstellung eines real vorhandenen, zu entwickelnden und/oder zu simulierenden technischen Systems handelt, häufig um ein Steuerungssystem mit einer elektronischen Recheneinheit und mit dieser Recheneinheit verbundenen I/O-Geräten. Derartige technische Systeme können sehr komplex sein, sie können beispielsweise die komplette Elektronik eines Kraftfahrzeugs und/oder die physikalische Umgebung eines Kraftfahrzeugs abbilden und eine Vielzahl von Modellkomponenten aufweisen, die über Schnittstellen mit tausenden von Ports, d.h. Eingänge und / oder Ausgänge, miteinander verbunden sind und damit in Wirkzusammenhang stehen, was z.B. über entsprechende Verbindungslinien visualisiert wird.

Bei den Modellkomponenten kann es sich um Modellkomponenten gleicher Gattung handeln, also beispielsweise ausschließlich um Modellkomponenten eines abstrakten mathematischen Modells des technischen Systems, wie es seit langem aus der Regelungstechnik von Blockschaltbildern her bekannt ist, welche die physikalisch-technische Funktionalität des technischen Systems mit den Mitteln der Mathematik beschreiben (Übertragungsfunktionen, Look-up-Tables usw.).

Häufig weisen jedoch Modelle eines technischen Systems Modellkomponenten unterschiedlicher Gattung auf, was daran liegt, dass diese Modelle von technischen Systemen oder von Teilen technischer Systeme erstellt werden, um mit anderen, echten technischen Systemen oder mit Teilen echter technischer Systeme zusammenzuwirken. Dieses Szenario tritt z. B. bei der Entwicklung oder dem Test von Steuergeräten bzw. bei der Entwicklung von auf Steuergeräten zu realisierenden Steuerungen/Regelungen auf. Hier liegt häufig das Steuergerät als zu testende Hardware gegenständlich vor, die über geeignete I/O-Schnittstellen verfügt. Um das Steuergerät sicher und in einfacher Weise zu testen, wird die Umgebung des Steuergeräts - ein physikalischer Prozess - mit Hilfe eines mathematischen Modells in einem Simulator abgebildet, der den physikalischen Prozess in Echtzeit berechnen kann. Die Größen, die von dem Steuergerät messtechnisch zu erfassen sind und von dem Steuergerät als Reaktion auszugeben sind, werden über entsprechend programmierbare I/O-Schnittstellen des Simulators ausgegeben bzw. messtechnisch erfasst. Die zuvor beschriebene Testmethode wird auch als Hardware-in-the-Loop-Simulation bezeichnet. Im Modell des technischen Systems sind entsprechend Repräsentanten für die Ein- und Ausgänge des Steuergeräts und ein Umgebungsmodell vorhanden. Diese werden im Modell miteinander verbunden. Weiterhin können im Modell I/O-Funktionen festgelegt und konfiguriert werden, durch welche bestimmt wird, wie das Umgebungsmodell und das Steuergerät zusammenwirken sollen und welcher Steuergeäteeingang bzw. -ausgang mit welchem Teil des Modells und mit welcher Schnittstelle des Umgebungsmodells zusammenwirken soll. Andere Anwendungsfälle für die Erstellung von Modellen technischer Systeme werden beispielsweise unter dem Begriff Rapid Control Prototyping zusammengefasst. Hier wird-um den zuvor genannten Aufbau wieder aufzugreifen - praktisch das Steuergerät und der auf dem Steuergerät zu implementierende Regler simuliert und zusammen mit dem echten technischen Prozess getestet. Bei beiden Test-Szenarien, für die das Modell eines technischen Systems bzw. des Teils eines technischen Systems zu erstellen ist, werden die verschiedenen Bereiche des Testsystems, also Steuergeräte-Hardware, I/O-Schnittstellen des Simulators und das mathematische Modell des technischen Prozesses auf dem Simulator zusammengeführt.

Eine Konfigurations- und Modellintegrationseinrichtung, bei der das Modell des technischen Systems Modellkomponenten unterschiedlicher Art umfasst, also Modellkomponenten des mathematischen Modells und/oder Modellkomponenten der insbesondere programmierbaren I/O-Schnittstellen und/oder Modellkomponenten einer tatsächlich vorhandenen Hardware, ist beispielsweise aus der US 2008/0091279 A1 bekannt.

Jede Modellkomponente weist eine oder mehrere Ports, also Eingänge und / oder Ausgänge auf, über welche zwei Modellkomponenten miteinander verbunden werden können. Eine solche Verbindung im Modell repräsentiert eine Verbindung im technischen System. Ebenso wie Modellkomponenten sowohl gleicher Gattung als auch verschiedener Gattung miteinander verbunden werden können, repräsentiert eine solche Verbindung von Modellkomponenten unterschiedliche Verbindungen im technischen System. Insbesondere stellen die Verbindungen zwischen verschiedenen Gattungen von Modellkomponenten physische Verbindungen zwischen den Bereichen des Testsystems dar, beispielsweise ein Kabel zwischen einem Steuergerät und einem Simulator, oder logische Verbindungen, beispielsweise die Verknüpfung zwischen einer Variable des Umgebungsmodells und einer I/O Funktionalität des Simulators.

Speziell, wenn zwischen zwei Modellkomponenten eine Vielzahl zu übermittelnder Signale oder Datenelemente übergeben werden, werden oft Strukturierungen der Modellkomponente vorgenommen oder Modellkomponenten bzw. ihre Schnittstellen strukturiert dargestellt, z.B. um eine übersichtlichere Darstellung und damit einfachere Handhabung zu erreichen. Derartige Elemente zur hierarchischen Strukturierung einer Modellkomponente stellen Hierarchieelemente dar, welche zur Strukturierung wiederum weitere Hierarchieelemente enthalten können. Die unterste Hierarchiestufe bilden hierbei die Ports, welche für einen Eingang, einen Ausgang oder eine bidirektionale Schnittstelle der Modellkomponente stehen, also den Teil der Modellkomponente repräsentieren, über den Datenelemente und / oder Signale mit einer anderen Modellkomponente ausgetauscht werden.

Wenn keine Strukturierung der Modellkomponente vorgenommen oder dargestellt wird, so müssen in der Regel zur Herstellung einer eindeutigen Bezeichnung der an den Ports zu übermittelnden Signalen oder Datenelemente Ergänzungen der Portbezeichner vorgenommen werden, z.B. durch Anfügen von "_1", "_2", etc. Bei Vorliegen einer semantischen Strukturierung der Ports erfolgt dies dagegen häufig durch Hinzufügen der Strukturinformationen in den Namen des Ports.

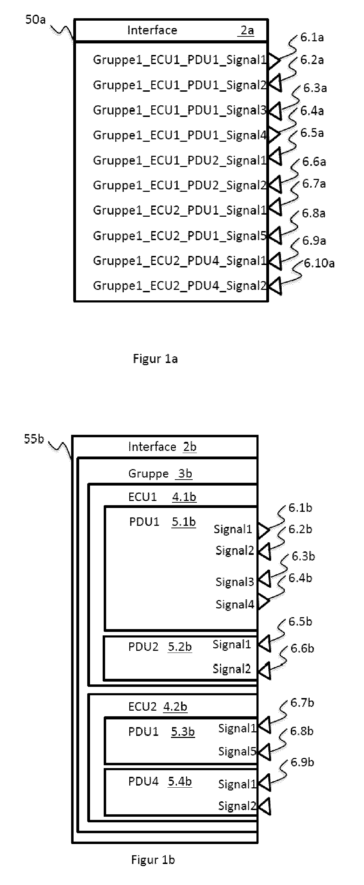

Eine unstrukturierte Modellkomponente 50a mit einer Schnittstelle "Interface" 2a ist in Figur 1a beispielhaft dargestellt. In den Figuren sind gleichartige Teile mit identischen Bezeichnungen beschriftet, leicht abweichende Teile werden durch unterschiedliche Buchstaben-Suffixe im Bezeichner unterschieden. Wenn ein Teil allgemein beschrieben wird, wird die Bezeichnung ohne Buchstaben-Suffix verwendet.

Dabei werden in Figur 1a sowie in den folgenden Figuren gerichtete Ports 6.1, ... 6.10 bzw. 26.1, ..., 26.10 durch Dreiecke dargestellt, wobei die Richtung des Dreiecks die Richtung des Signal- oder Datenflusses des jeweiligen Ports darstellt. Zeigt also die Spitze des Dreiecks zur Modellkomponente so ist beispielsweise ein Eingangsport dargestellt, weist die Spitze des Dreiecks von der Modellkomponente weg, so ist beispielsweise ein Ausgangsport dargestellt. Somit sind die Ports 6.1 und 6.4 Ausgangsports und die Ports 6.2, 6.3, 6.5, 6.6, 6.7, 6.8, 6.9 und 6.10 Eingangsports.

Weiterhin ist es möglich, dass es bidirektionale Ports gibt, die wiederum durch ein anderes Symbol, beispielsweise durch eine Raute statt einem Dreieck dargestellt werden.

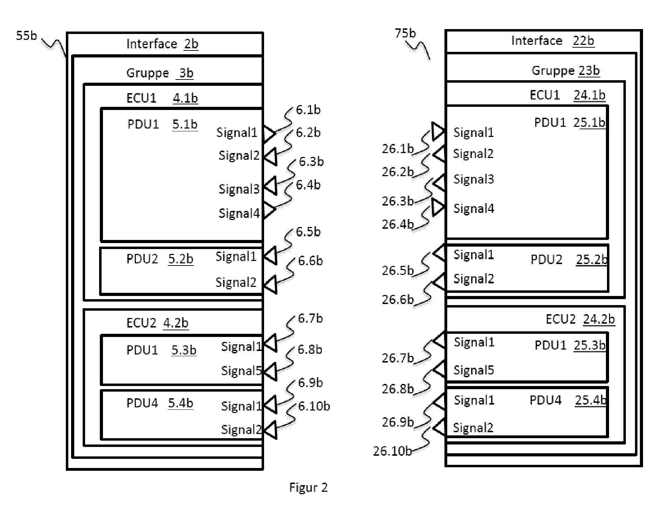

In Figur 1a und den folgenden Figuren tritt beispielsweise das Signal "Signall" an den Ports 6.1, 6.5, 6.7 und 6.9 und somit an verschiedenen Stellen auf, wobei sich die Signalflussrichtung und der Kontext bei den verschiedenen Instanzen unterscheidet, so dass durchaus inhaltlich andere Informationen in den verschiedenen Instanzen über den Port übermittelt werden können. In der unstrukturierten Modellkomponente wird im Beispiel nun der Kontext von "Signall", in diesem Fall die über einen Bus zu übertragende Dateneinheit PDU (Protocol Data Unit), in der es übermittelt wird, das Steuergerät (ECU), das es übermittelt, und die Gruppe (wie z.B. Cluster oder Kommunikationsmatrix), zu der es gehört, in den Portnamen kodiert, während in der strukturierten Darstellung der Modellkomponente in Figur 1b sowie in Figur 2 die Eindeutigkeit über die Struktur gegeben ist und daher der Name des Signals direkt als Name des Ports verwendet bzw. dargestellt werden kann. Die Struktur ist durch die Hierarchieelemente Interface 2, 22, Gruppe 3, 23, ECU1 4.1, 24.1, ECU2 4.2, 24.2 und die Hierarchieelemente für die PDUs 5.1, ...5.4, 25.1, ... 25.4 gegeben. Eine Modellkomponente wird somit mittels Hierarchieelementen strukturiert, wobei Hierarchieelemente ineinander verschachtelt sein können. Ports 6.1, ..., 16.10 befinden sich auf der untersten Hierarchiestufe, allerdings können sie unterschiedlich viele übergeordnete Hierarchiestufen aufweisen, je nach dem auf welcher Hierarchiestufe sich das Hierarchieelement befindet, welches den Port aufweist.

Gemäß dem Stand der Technik besteht in grafischen Bedien- und/oder Konfigurations-Werkzeugen, wie zum Beispiel ConfigurationDesk und SystemDesk von dSPACE die Möglichkeit, einzelne Ports auf einer graphischen Benutzeroberfläche miteinander zu verbinden, z.B. in dem der Benutzer eine Linie zwischen diesen Ports zieht.

Ebenfalls ist es gemäß Stand der Technik möglich, Ports, die sich wie in Figur 2 gezeigt in zwei strukturierten Modellkomponenten 55, 75 auf gleicher Hierarchiestufe befinden in einer graphischen Benutzeroberfläche automatisch zu verbinden, wobei bevorzugt exakt passende Ports, d.h. die sich in der Richtung unterscheiden, aber sonst die identische Bezeichner auf allen Hierarchiestufen und eine identische Hierarchie besitzen, automatisch verbunden werden.

Dazu muss eine erste Menge von Ports und eine zweite Menge von Ports ausgewählt werden, wobei die Ports der ersten Menge automatisch mit Ports der zweiten Menge passend verbunden werden sollen. Die Auswahl von Ports kann durch eine Auswahl der Ports selber oder eine indirekte Auswahl der Ports über ihre übergeordneten Hierarchieelemente oder die Modellkomponente erfolgen. Dabei bedeutet die Auswahl einer Modellkomponente oder eines Hierarchieelements, dass alle darin enthaltenen Ports ausgewählt wurden und somit zur entsprechenden Menge gehören.

Die Auswahl erfolgt über eine grafische Benutzereingabe, beispielsweise über Auswahl aus einer Liste oder Auswahl in den grafischen Modellkomponenten über ein Eingabegerät, wie z.B. eine Maus, eine Tastatur oder per Berührungsbedienung.

Für die Erfindung ist es irrelevant, welche visuellen Gestaltungsmittel zur Darstellung von Hierarchieelementen und Ports, sowie deren Beziehungen gewählt werden. Vorteilhafte Ausführungen sind z.B. eine Baumdarstellung oder eine Darstellung als strukturierter Block.

In Figur 2 könnten im Stand der Technik somit beispielsweise die Port 6.1b mit 26.1b, 6.2b mit 26.2b usw. nach einer Auswahl der ersten Modellkomponente und damit ihrer Ports als erste Menge von Ports und der zweiten Modellkomponente und damit ihrer Ports als zweite Menge von Ports automatisch verbunden werden.

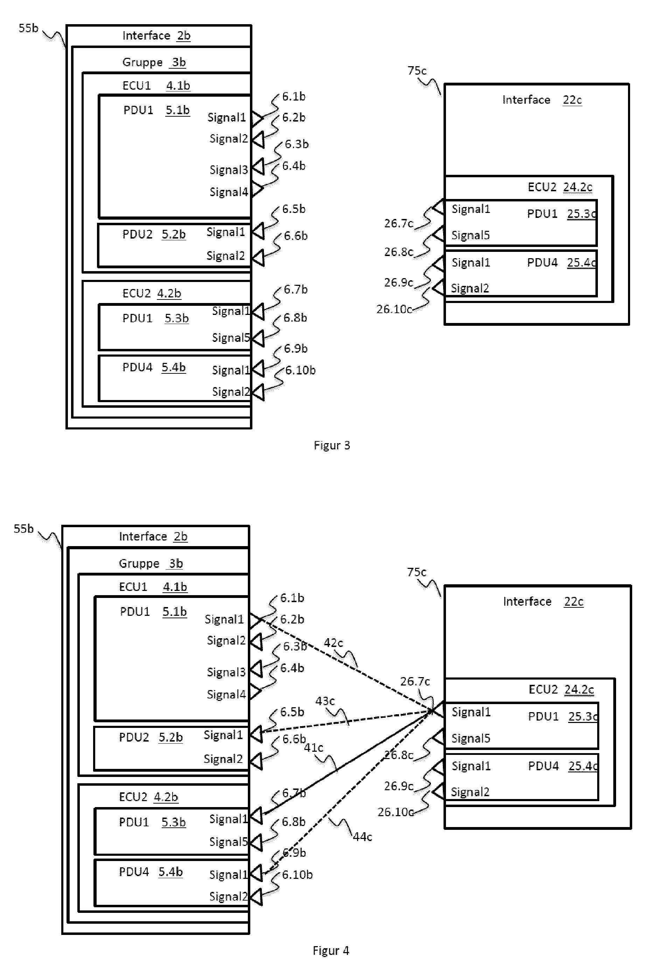

Nicht möglich ist es im Stand der Technik jedoch, die automatische Verbindung nur für Teilstrukturen der Modellkomponenten anzustoßen und / oder Ports mit unterschiedlichen übergeordneten Hierarchiestufen in einer graphischen Bedienoberfläche automatisch miteinander zu verbinden. Sobald eine erste Modellkomponente 55 z.B. eine übergeordnete Hierarchiestufe (Gruppe 3) mehr aufweist als eine zweite Modellkomponente 75c mit den Hierarchieelementen 22c, 24.3c, 25.3c und 25.4c und den Ports 26.7c, ... 26.10c, wie in Figur 3 gezeigt, ist es im Stand der Technik nicht mehr möglich die Ports der ersten und zweiten Modellkomponenten automatisch zu verbinden, da diese z.B. in der Hierarchie ausgehend von der obersten Hierarchiestufe auf Identität geprüft werden.

Eine wichtige Aufgabe im Bereich der Erstellung, Konfiguration und insbesondere auch der Integration, d.h. Verknüpfung von großen Modellen stellt die komfortable Herstellung von entsprechend des semantischen Kontexts der (gerichteten) Ports passenden Verbindungen zwischen Ports verschiedener Modellkomponenten bzw. verschiedener Teile von Modellkomponenten eines Systems dar.

Betrachtet man z.B. eine Modellkomponente die einige hundert Ports besitzt und anhand des semantischen Kontexts passend mit einer oder mehreren weiteren Modellkomponenten und oder Teilen von Modellkomponenten verbunden werden soll, so erschließt sich direkt, dass ein manuelles Verbinden aller einzelnen Ports, z.B. durch Ziehen einer Verbindungslinie zwischen den Ports, durch "Drag & Drop" oder eine andere händische Benutzeraktion, mühsam und fehleranfällig ist.

Bei einem automatisierbaren System wäre eine Alternative gemäß Stand der Technik, dass der Benutzer die Verbindung zwischen den Ports "programmiert", z.B. in Form eines Automatisierungsskripts.

Für einen Benutzer, der eine Bedienung einer grafischen Benutzeroberfläche gewohnt ist, geht dies allerdings mit einem Bruch einher, und er muss sich in neue Sachverhalte (z.B. die Programmiersprache des Automatisierungsskripts) einarbeiten. Zudem ist in einer programmatischen Realisierung eine übersichtliche Darstellung, in der man den Kontext eines Ports auf einen Blick sieht deutlich schwieriger, als in einer visuellen Darstellung, wie sie z.B. in Figur 1b dargestellt ist.

Eine Aufgabe ist es daher, dass der Benutzer des Systems in die Lage versetzt wird, eine automatische Verbindung zwischen einer Vielzahl von zum Kontext passenden Ports ohne Fehler durch einen einzigen bzw. möglichst wenig Bedienschritte einer graphischen Benutzeroberfläche zu erreichen.

Insbesondere soll dies auch möglich sein, wenn zu verbindende strukturierte Modellkomponenten oder die zu verbindenden Teile strukturierter Modellkomponenten auf beiden zu verbindenden Seiten nicht die gleichen Hierarchiestufen aufweisen, wie in Figur 2 dargestellt, sondern einen unterschiedlichen Hierarchieaufbau, wie in Figur 3 dargestellt. Es soll automatisch erkannt werden, welche Ports miteinander verbunden werden können und welche nicht. In Figur 4 sind solche möglichen Verbindungen dargestellt, wobei die durchgezogene Verbindung 41c eine mögliche Zuordnung darstellt, die automatisch verbunden werden soll, da sie die höchste Übereinstimmung aufweist. Die gestrichelten Verbindungen 42c, 43c, 44c stellen alternative Zuordnungen dar.

Durch die Erfindung wird der Benutzer in die Lage versetzt, von beliebigen Hierarchieelementen einer Modellkomponente zu beliebigen Hierarchieelementen der anderen Modellkomponente, unabhängig davon, ob diese auf gleicher Hierarchiestufe liegen, eine Verbindung derart anzustoßen, dass unterhalb der gewählten Hierarchieelemente der jeweiligen Modellkomponente die "passenden" Ports automatisch verbunden werden. Hierbei wird durch Berücksichtigung u.a. von Richtungs- und Strukturierungsinformation (d.h. dem "Kontext" eines Ports) ein Verbinden "falscher" Ports verhindert.

Die Aufgabe wird durch ein Verfahren zur Konfiguration eines Modells eines technischen Systems auf einem Computer mit einer Anzeige mit den Merkmalen des Patentanspruchs 1 gelöst. Vorteilhafte Ausgestaltungen der Erfindung sind Gegenstand von Unteransprüchen.

Gemäß dem Gegenstand der Erfindung erfolgt das Verfahren zum automatischen Verbinden von Modellkomponenten eines Modells eines technischen Systems auf einem Computer mit einer Anzeige, wobei das Modell eine erste Modellkomponente und eine zweite Modellkomponente aufweist.

Die erste Modellkomponente und die zweite Modellkomponente weisen jeweils mindestens ein Hierarchieelement auf, wobei ein Hierarchieelement kein Hierarchieelement oder ein Hierarchieelement oder mehrere Hierarchieelemente enthält.

Ein Hierarchieelement weist keinen Port, einen Port oder mehrere Ports auf, wobei ein Hierarchieelement einen Bezeichner aufweist und ein Port einen Bezeichner aufweist.

Eine Verbindung zwischen einem ersten Port und einem zweiten Port stellt eine Zuordnung im technischen System dar.

Das Verfahren besteht nun darin, dass durch eine grafische Benutzeraktion eine erste Menge von Hierarchieelementen und / oder Ports und eine zweite Menge von Hierarchieelementen und / oder Ports ausgewählt wird und dass für einen ersten Port der ersten Menge und einen zweiten Port der zweiten Menge eine mögliche Zuordnung geprüft wird und bei Vorliegen einer möglichen Zuordnung der erste Port der ersten Menge automatisch mit dem zweiten Port der zweiten Menge verbunden wird.

Eine alternative Form des Verfahrens besteht darin, dass durch eine grafische Benutzeraktion eine erste Menge von Hierarchieelementen und / oder Ports und eine zweite Menge von Hierarchieelementen und / oder Ports ausgewählt wird und für einen ersten Port der ersten Menge und jeden Port der zweiten Menge eine mögliche Zuordnung geprüft wird und anhand einer vorgebbaren ersten Strategie eine Zuordnung aus der Menge aller als mögliche Zuordnungen erkannten Zuordnungen des ersten Ports der ersten Menge mit einem Port der zweiten Menge ausgewählt wird und der erste Port der ersten Menge entsprechend der ausgewählten Zuordnung mit einem Port der zweiten Menge verbunden wird.

Eine mögliche Zuordnung ist erfindungsgemäß dann gegeben, wenn für den ersten Port und den zweiten Port, sowie entsprechend der Hierarchie aufsteigend von dem ersten Port und dem zweiten Port aus die Bezeichner derjenigen Hierarchieelemente, die dem ersten Port und dem zweiten Port übergeordnet sind, jeweils auf einer ausgehend vom Port gleichen Hierarchiestufe bis zu einer vorgebbaren Anzahl von Hierarchiestufen übereinstimmen oder gemäß einer vorgegebenen Regel als übereinstimmend bewertet werden.

Die vorgebbare Anzahl von Hierarchiestufen bestimmt bis zu welcher Mindestanzahl von Hierarchiestufen die Bezeichner der Hierarchieelemente übereinstimmen oder als übereinstimmend bewertet werden müssen und legt somit eine Mindestübereinstimmung der Bezeichner in der Hierarchie der beiden Ports fest. Ist keine Mindestanzahl vorgegeben, so muss eine komplette Übereinstimmung der Bezeichner in der Hierarchie der Ports bis zur höchsten Hierarchiestufe einer der beiden Ports vorliegen. Dies bedeutet, wenn ein erster Ports sechs übergeordnete Hierarchiestufen hat und ein zweiter Port vier übergeordnete Hierarchiestufen und es ist keine Mindestanzahl der Hierarchiestufen zur Übereinstimmung vorgegeben, so müssen die Bezeichner aller übergeordneten Hierarchieelemente des zweiten Ports auf gleicher Hierarchiestufe mit den Bezeichnern der übergeordneten Hierarchieelemente des ersten Ports übereinstimmen. Gleiches gilt, wenn der erste Port weniger übergeordnete Hierarchiestufen hat als der zweite Port, auch dann müssen die Bezeichner aller übergeordneten Hierarchieelemente des ersten Ports auf gleicher Hierarchiestufe mit den Bezeichnern der übergeordneten Hierarchieelemente des zweiten Ports übereinstimmen. Beispiele für eine vorgegebene Anzahl von Hierarchiestufen werden in den Ausführungsbeispielen gegeben.

In einer bevorzugten Ausführungsform werden vor einer automatischen Verbindung zwischen einem ersten Port der ersten Menge und einem Port der zweiten Menge alle Ports der zweiten Menge auf eine mögliche Zuordnung zum ersten Port geprüft.

Dabei wird zu jeder möglichen Zuordnung geprüft, bis zu welcher Anzahl von Hierarchiestufen die Bezeichner für den ersten Port und den zweiten Port, sowie entsprechend der Hierarchie aufsteigend vom ersten Port und zweiten Port aus die Bezeichner der Hierarchieelemente, die dem ersten Port und dem zweiten Port übergeordnet sind, jeweils auf einer ausgehend vom Port gleichen Hierarchiestufe übereinstimmen oder als übereinstimmend bewertet werden.

In dieser bevorzugten Ausführungsform sieht beispielsweise die erste Strategie vor, dass diejenige Zuordnung für eine automatische Verbindung ausgewählt wird, bei welcher die Anzahl der Übereinstimmungen der Bezeichner in der Hierarchie ausgehend von dem ersten Port und dem zweiten Port am höchsten ist. Erfindungsgemäß kann über die vorgebbare Mindestanzahl eine Mindestübereinstimmung festgelegt werden, wobei in dieser bevorzugten Ausführungsform aus allen möglichen Zuordnungen, welche diese Mindestübereinstimmungen erfüllen, diejenige mit der höchsten Übereinstimmung gewählt wird, d.h. unter der Menge der möglichen Zuordnungen des ersten Ports der ersten Menge mit einem Port der zweiten Menge diejenige Zuordnung mit Übereinstimmung der Bezeichner von Hierarchieelementen auf der höchsten Hierarchiestufe gewählt wird, bei der für jedes untergeordnete Hierarchieelement auf gleicher Hierarchiestufe und die Ports die Bezeichner übereinstimmen bzw. als übereinstimmend bewertet werden.

Es wird somit bottom-up, also von unten (d.h. ausgehend vom Port) nach oben in der Hierarchie, die Übereinstimmung der Bezeichner in der Hierarchie von zwei Ports geprüft und eine Anzahl der Übereinstimmungen festgestellt.

In anderen Worten, die Anzahl der Übereinstimmungen zwischen einem ersten und einem zweiten Port wird bottom-up ermittelt, in dem jeweils vom Port ausgehend in der Hierarchiestruktur "nach oben" die Anzahl gemäß eines Übereinstimmungsmaßes identischer Hierarchieelemente gezählt wird, bis eine Ungleichheit im Sinne des Übereinstimmungsmaßes vorliegt. Sobald zwei die Bezeichner zweier Hierarchieelemente nicht übereinstimmen bzw. nicht als übereinstimmend bewertet werden können, wird nicht weiter auf Übereinstimmung geprüft, so dass die Anzahl der Übereinstimmungen gleich zu setzen ist mit der Anzahl der Hierarchiestufen zweier Ports, deren Bezeichner ausgehend vom Port auf gleicher Hierarchiestufe übereinstimmen oder als übereinstimmend bewertet werden können.

Nimmt man als Übereinstimmungsmaß einen identischen Bezeichner, also Namen, so ermittelt sich die Anzahl der Übereinstimmungen, in dem zunächst geprüft wird, ob die beiden Ports einen identischen Namen besitzen. Falls dies nicht der Fall ist, beträgt die Anzahl der Übereinstimmungen null.

Falls die beiden Ports einen identischen Namen aufweisen, wird der Name des direkt über dem ersten Port liegenden Hierarchieelements mit dem Name des direkt über dem zweiten Port liegenden Hierarchieelements verglichen. Falls diese nicht übereinstimmen, beträgt die Anzahl der Übereinstimmungen eins. Falls sie übereinstimmen, wird auf beiden Seiten mit dem nächsthöheren Hierarchieelement fortgeschritten, bis auf einer Seite das oberste Hierarchieelement erreicht wurde, oder nicht übereinstimmende Namen gefunden wurden.

Allerdings ist es möglich, dass zwei mögliche Zuordnungen bis zur gleichen Anzahl von Hierarchiestufen Übereinstimmungen der Bezeichner aufweisen. In einer weiteren Ausführungsform ist mittels einer zweiten Strategie vorgebbar ist, wie mit zwei möglichen Zuordnungen zu einem Port verfahren werden soll, welche beide die gleiche höchste Anzahl an Übereinstimmungen aufweisen.

Beispielsweise besteht die zweite Strategie darin, keine Zuordnung auszuwählen. In einer weiteren Ausführungsform kann ein Port mehrfach verbunden werden. In dieser Ausführungsform besteht die zweite Strategie beispielsweise darin alle Zuordnungen auszuwählen, bei denen die Hierarchiestufe gleich ist und welche die höchste Anzahl an Übereinstimmungen aufweisen. Alternativ besteht die zweite Strategie darin nur die erste Zuordnung mit der höchsten Anzahl an Übereinstimmungen auszuwählen.

In einer weiteren bevorzugten Ausführungsform bleiben Ports, die bereits vor der Auswahl der ersten Menge von Ports und der zweiten Menge von Ports verbunden waren, bei der Prüfung auf eine mögliche Zuordnung unberücksichtigt.

In einer weiteren Ausführungsform können ein oder mehrere Hierarchieelemente der ersten Menge und /oder ein oder mehrere Hierarchieelemente der zweiten Menge von der Überprüfung der Bezeichner auf gleicher Hierarchiestufe ausgenommen werden.

In einer weiteren bevorzugten Ausführungsform ist ein Port entweder ein Eingangsport oder ein Ausgangsport und eine mögliche Zuordnung wird nur zwischen einem Eingangsport und einem Ausgangsport erkannt.

In einer weiteren Ausführungsform ist einem Ausgangsport ein Datentyp zugeordnet und einem Eingangsport eine Menge von Datentypen zugeordnet, die von diesem Port verarbeitet werden können, wobei eine mögliche Zuordnung zwischen einem Eingangsport und einem Ausgangsport nur erkannt wird, wenn der Eingangsport den Datentyp des Ausgangsport verarbeiten kann.

Die Erfindung wird nachfolgend unter Bezugnahme auf die Zeichnungen näher erläutert. In den Figuren sind gleichartige Teile mit identischen Bezeichnungen beschriftet, leicht abweichende Teile werden durch unterschiedliche Buchstaben-Suffixe im Bezeichner unterschieden. Wenn ein Teil allgemein beschreiben wird, wird die Bezeichnung ohne Buchstaben-Suffix verwendet. Darin zeigen die:
- Figur 1a: eine Darstellung einer unstrukturierten Modellkomponente nach dem Stand der Technik,
- Figur 1b: eine Darstellung einer strukturierten Modellkomponente nach dem Stand der Technik,
- Figur 2: eine Darstellung von Ports mit gleicher übergeordneter Hierarchie nach dem Stand der Technik
- Figur 3: eine Darstellung von Ports mit verschiedenen übergeordneten Hierarchien nach dem Stand der Technik
- Figur 4: eine erfindungsgemäße Darstellung möglicher Zuordnungen zwischen zwei Ports

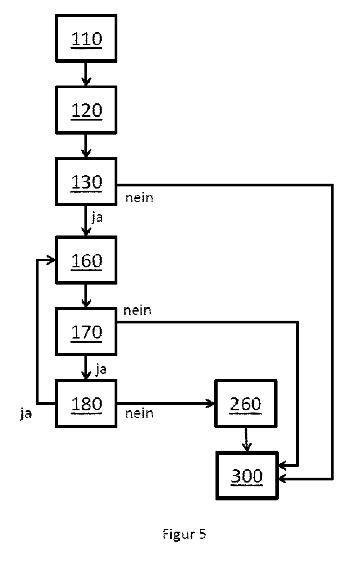

- Figur 5: Beispielhafter Ablauf des erfindungsgemäßen Verfahrens

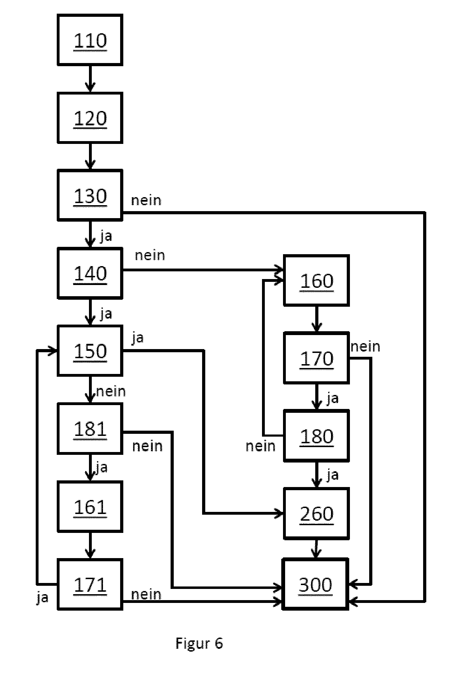

- Figur 6: Beispielhafter Ablauf des erfindungsgemäßen Verfahrens mit einer Mindestanzahl an Übereinstimmungen

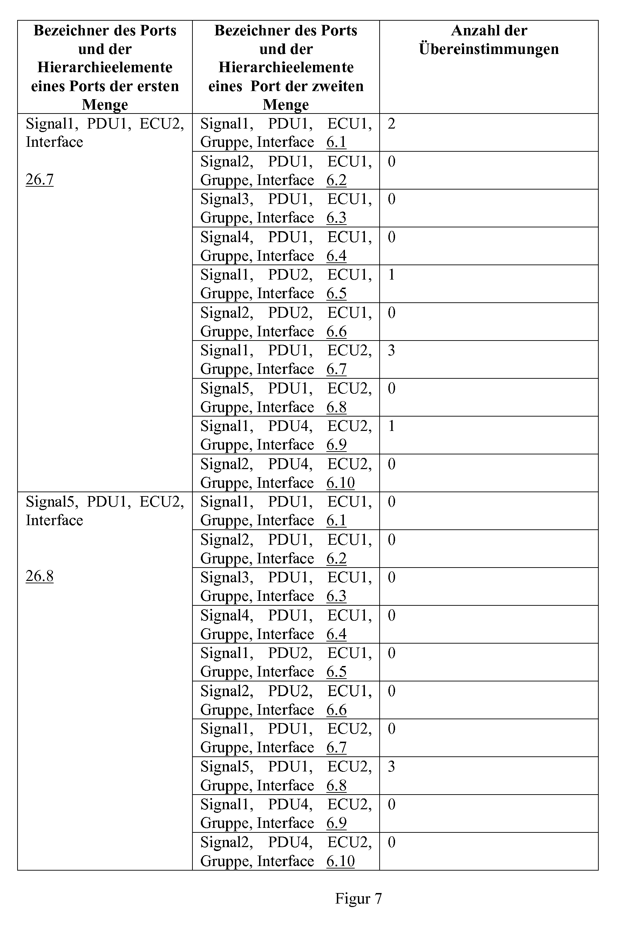

- Figur 7: Beispieltabelle der Anzahl der Übereinstimmungen zwischen Ports einer ersten Menge und Ports einer zweiten Menge

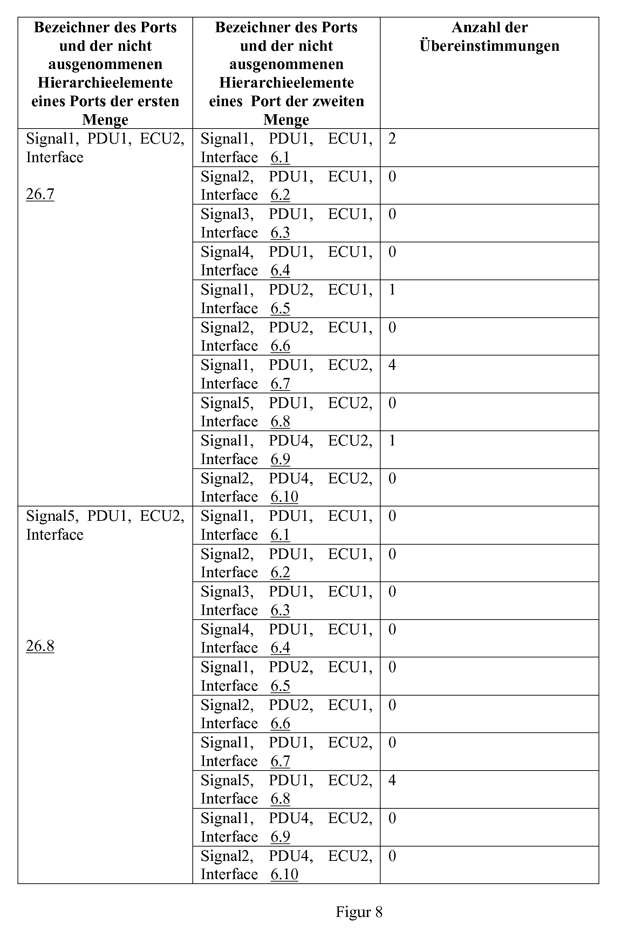

- Figur 8: Beispieltabelle der Anzahl der Übereinstimmungen zwischen Ports einer ersten Menge und Ports einer zweiten Menge bei Nicht-Berücksichtigung einer strukturellen Hierarchiestufe

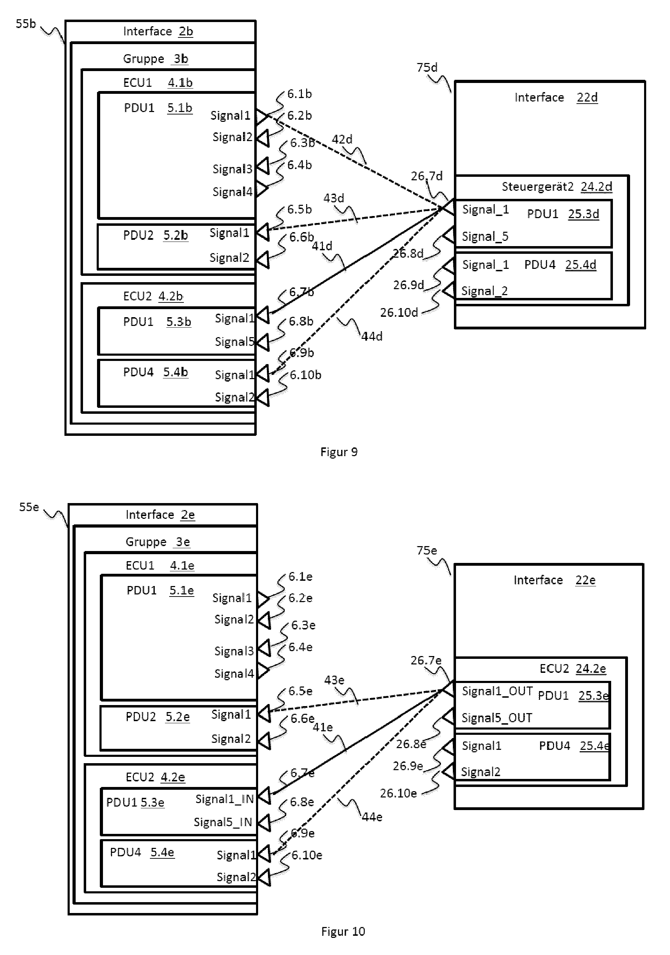

- Figur 9: eine Darstellung möglicher Zuordnungen zwischen zwei Ports mit unterschiedlichen Bezeichnern der Ports und/oder übergeordneter Hierarchieelemente, die als gleich bewertet werden sollen
- Figur 10: eine Darstellung möglicher Zuordnungen zwischen zwei Ports mit unterschiedlichen Teilen von Bezeichnern, die als gleich bewertet werden sollen

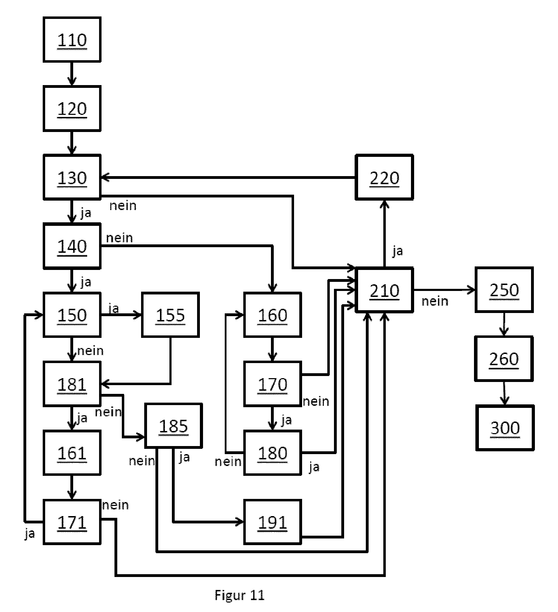

- Figur 11: Beispielhafter Ablauf des erfindungsgemäßen Verfahrens mit einer Mindestanzahl an Übereinstimmungen und Auswahl der höchsten Anzahl an Übereinstimmung

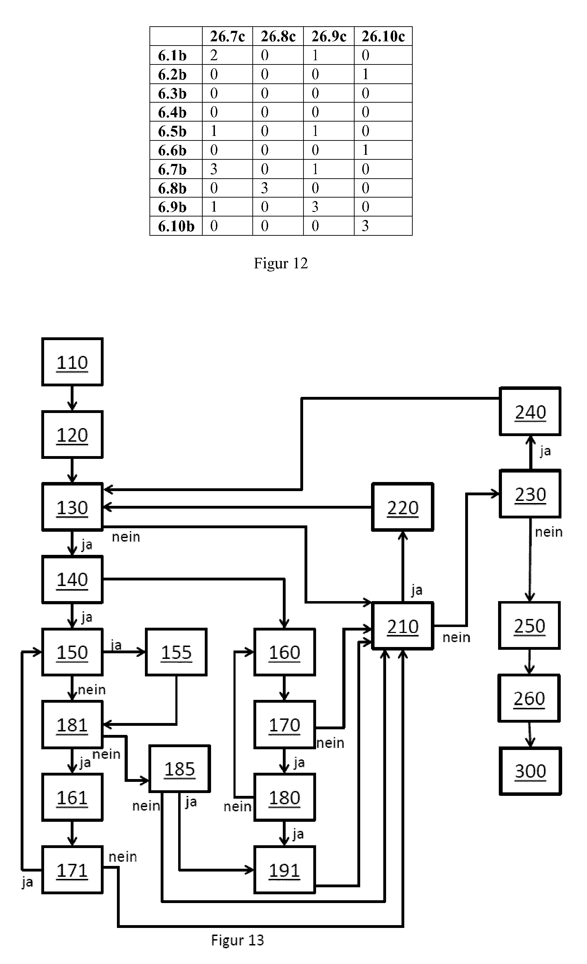

- Figur 12: Matrix der Anzahl der Übereinstimmungen zwischen Ports einer ersten Menge und Ports einer zweiten Menge
- Figur 13: Weitere Ausgestaltung eines beispielhaften Ablaufs des erfindungsgemäßen Verfahrens

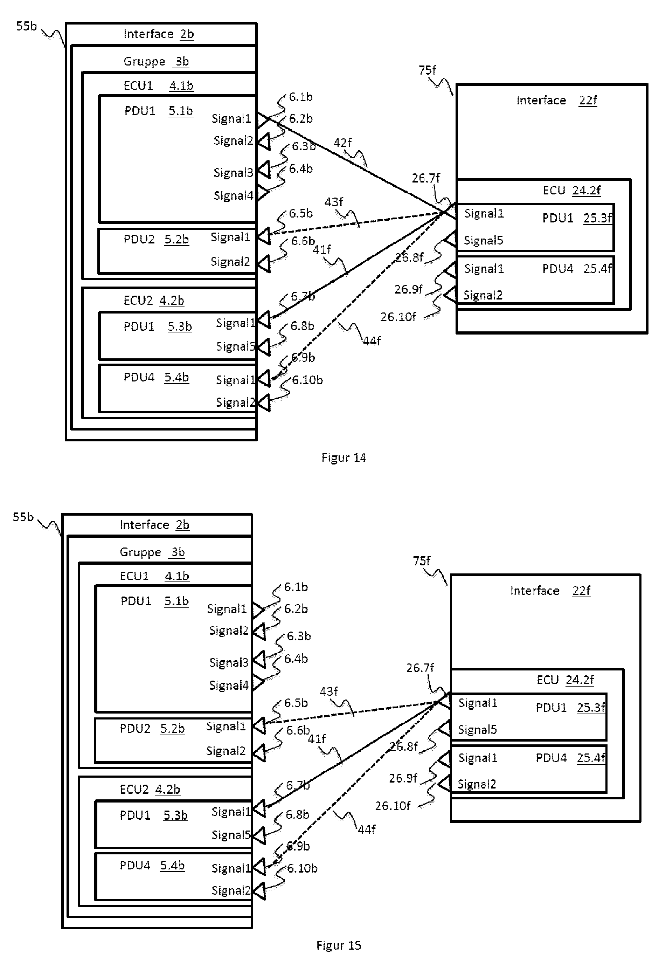

- Figur 14: Darstellung von zwei möglichen Zuordnungen mit höchster Übereinstimmungsanzahl
- Figur 15: Darstellung von möglichen Zuordnungen unter Berücksichtigung von Eingangsports und Ausgangsports

In Figur 4 ist ein mögliches Ziel der Aufgabe dargestellt, nämlich bei Auswahl zweier Mengen von Ports aus zwei Modellkomponenten mit unterschiedlicher Hierarchie eine automatische Verbindung 41c der nach Bezeichner und Hierarchiestufen mit höchster Anzahl an Übereinstimmungen passenden Ports 6.7b und 26.7c.

Die Auswahl der ersten Menge von Ports und der zweiten Menge von Ports erfolgt beispielsweise per Maus, indem der Port 26.7c als erste Menge und das Hierarchieelement "Interface" 2b und damit alle diesem Hierarchieelement untergeordneten Ports 6.1b, ...6.10b als zweite Menge von Ports ausgewählt werden.

Ein beispielhafter Ablauf ist in Figur 5 dargestellt. In einem ersten Verfahrensschritt 110 werden eine erste Menge von Ports und eine zweite Menge von Ports ausgewählt.

Im nächsten Verfahrensschritt 120 werden ein erster Port der ersten Menge und ein zweiter Port der zweiten Menge ausgewählt. Eine Auswahl erfolgt beispielsweise indem jeweils aus der ersten Menge und der zweiten Menge der erste Port einer Liste von Ports als erste Port und zweiter Port genommen werden.

In einem Verfahrensschritt 130 wird geprüft, ob der Bezeichner des ersten Ports mit dem Bezeichner des zweiten Ports übereinstimmt oder als übereinstimmend bewertet werden. Ist dies nicht der Fall, gibt es zwischen dem ersten und dem zweiten Port keine mögliche Zuordnung und das Verfahren endet 300 bzgl. der Prüfung des ersten Ports der ersten Menge und des zweiten Ports der zweiten Menge.

Stimmten die beiden Bezeichner der Ports überein, bzw. wurden sie als übereinstimmend bewertet, so werden in einem Verfahrensschritt 160 die beiden übergeordneten Hierarchieelemente ausgewählt. Es werden somit nach dem Verfahrensschritt 130 die beiden dem ersten Port und dem zweiten Port übergeordneten Hierarchieelemente als zu prüfende Hierarchieelemente ausgewählt.

In einem Verfahrensschritt 170 wird geprüft, ob die Bezeichner der in Verfahrensschritt 160 ausgewählten Hierarchieelemente übereinstimmen bzw. als übereinstimmend bewertet werden können. Ist dies nicht der Fall, gibt es zwischen dem ersten und dem zweiten Port keine mögliche Zuordnung und das Verfahren endet 300 bzgl. der Prüfung des ersten Ports der ersten Menge und des zweiten Ports der zweiten Menge.

Stimmen im Verfahrensschritt 170 die beiden Bezeichner überein, wird in einem Verfahrensschritt 180 geprüft, ob die beiden im Verfahrensschritt 160 ausgewählten Hierarchieelemente wiederum übergeordnete Hierarchieelemente aufweisen.

Wird im Verfahrensschritt 180 festgestellt, dass einer der beiden im Verfahrensschritt 160 ausgewählten kein übergeordnetes Hierarchieelement mehr aufweist, werden der erste Port der ersten Menge und der zweite Port der zweiten Menge in einem Verfahrensschritt 260 automatisch verbunden und das Verfahren endet 300.

Weisen beide im Verfahrensschritt 160 ausgewählten Hierarchieelemente übergeordnete Hierarchieelemente auf, werden diese beiden übergeordneten Hierarchieelemente als neue prüfende Hierarchieelemente im Verfahrensschritt 160 ausgewählt. Weiterhin ist beispielsweise eine Anzahl der Hierarchiestufen vorgegeben, bis zu der die Bezeichner von Ports und Hierarchieelementen übereinstimmen sollen. Es wird somit eine Mindestanzahl der Übereinstimmungen vorgegeben.

Ein beispielhaftes Ablaufdiagramm unter der optionalen Vorgabe einer Mindestanzahl ist in Figur 6 dargestellt. Die Verfahrensschritte mit gleicher Nummerierung sind identisch mit den Verfahrensschritten im Beispiel zu Figur 5. Im Beispiel von Figur 6 kann jedoch eine Mindestanzahl an Übereinstimmungen optional vorgegeben sein. Deshalb wird nach dem Verfahrensschritt 130 in einem Verfahrensschritt 140 geprüft, ob eine Mindestanzahl vorgegeben wurde. Ist dies nicht der Fall, geht es wie im Beispiel zu Figur 5 mit den Verfahrensschritten 160, 170, 180, 260 und 300 weiter.

Wurde jedoch eine Mindestanzahl an Übereinstimmungen vorgegeben, so wird in einem Verfahrensschritt 150 überprüft, ob bereits die Mindestanzahl an Übereinstimmungen erreicht wurde. Ist dies der Fall, so werden der erste Port der ersten Menge und der zweite Port der zweiten Menge in einem Verfahrensschritt 260 automatisch verbunden und das Verfahren endet 300.

Wurde die Mindestanzahl an Übereinstimmungen noch nicht erreicht, so wird in einem Verfahrensschritt 181 geprüft, ob die zuletzt geprüften beiden Ports bzw. Hierarchieelemente noch übergeordnete Hierarchieelemente aufweisen.

Falls einer der beiden zuletzt geprüften Ports bzw. Hierarchieelemente kein übergeordnetes Hierarchieelement aufweist, endet in einem Verfahrensschritt 300 das Verfahren ohne dass die beiden Ports verbunden wurden.

Weisen die zuletzt geprüften beiden Ports bzw. Hierarchieelemente noch übergeordnete Hierarchieelemente auf, so werden in einem Verfahrensschritt 161 diese beiden übergeordneten Hierarchieelemente ausgewählt und in einem Verfahrensschritt 171 geprüft, ob die Bezeichner der beiden in Verfahrensschritt 161 ausgewählten Hierarchieelemente übereinstimmen bzw. als übereinstimmend bewertet werden.

Stimmen die Bezeichner nicht überein, endet in einem Verfahrensschritt 300 das Verfahren ohne dass die beiden Ports verbunden wurden.

Stimmen die Bezeichner überein, so wird wiederum Verfahrensschritt 150 ausgeführt und geprüft, ob die Mindestanzahl an Übereinstimmungen erreicht wurde.

In einer beispielhaften Ausführungsform bedeutet die Anzahl eins, dass lediglich die Portnamen übereinstimmen müssen. Im Beispiel anhand von Figur 4 wären dann die Zuordnungen 41c, 42c, 43c und 44c mögliche Zuordnungen.

Ist jedoch die Anzahl zwei vorgegeben, dann werden erfindungsgemäß zuerst alle Ports auf Übereinstimmung der Bezeichner geprüft und im Beispiel von Figur 4 die Zuordnungen 41c, 42c, 43c und 44c, also zwischen Port 26.7c zu den Ports 6.1b, 6.5b, 6.7b und 6.9b gefunden. Da aber die Anzahl zwei vorgegeben ist, wird nun verglichen, ob die Bezeichner des direkt in der Hierarchie übergeordneten Hierarchieelements 5.1b des Ports 6.1b mit dem Bezeichner des direkt in der Hierarchie übergeordneten Hierarchieelements 25.3c des Ports 26.7c übereinstimmen. Da in diesem Fall beide Bezeichner "PDU1" lauten, ist die Zuordnung 42c eine mögliche Zuordnung. Nach gleichem Prinzip ist die Zuordnung 41c zwischen dem Port 6.7b und dem Port 26.7c eine mögliche Zuordnung, da bis zu einer Anzahl von zwei Hierarchiestufen die Bezeichner der Ports 6.7b, 26.7c und der Hierarchieelemente 5.3b, 25.3c auf gleicher Hierarchiestufe übereinstimmen. Anders ist dies für die Zuordnungen 43c und 44c. Die Übereinstimmung zwischen dem Port 6.5b und dem Port 26.7c stimmt zwar auf einer Anzahl von einer Hierarchiestufe, also auf Portebene überein, aber auf der Anzahl von zwei Hierarchiestufen, also einer Hierarchiestufe über den jeweiligen Ports nicht mehr, da der Bezeichner des direkt in der Hierarchie übergeordneten Hierarchieelements 5.2b von Port 6.5b "PDU2" nicht mit dem Bezeichner des direkt in der Hierarchie übergeordneten Hierarchieelements 25.3c von Port 26.7c "PDU1" übereinstimmt. Ebenso stimmt der Bezeichner des direkt in der Hierarchie übergeordneten Hierarchieelements 5.4b von Port 6.9b "PDU2" nicht mit dem Bezeichner des direkt in der Hierarchie übergeordneten Hierarchieelements 25.3c von Port 26.7c "PDU1" überein.

Wenn die Anzahl drei als Anzahl der Hierarchiestufen und somit als Anzahl der Übereinstimmungen vorgegeben ist, wird eine Zuordnung erst dann als mögliche Zuordnung eingestuft, wenn die Bezeichner der Ports und der zwei Hierarchieelemente, welche den beiden Ports direkt übergeordnet sind, übereinstimmen. Waren die Zuordnungen 41c, 42c, 43c und 44c mögliche Zuordnungen mit einer Anzahl an Übereinstimmungen von eins und die Zuordnungen 41c und 42c mögliche Zuordnungen mit einer Anzahl an Übereinstimmungen von zwei, so ist nur die Zuordnung 41c eine mögliche Zuordnung mit der Anzahl an Übereinstimmungen von drei, da sowohl die Bezeichner der Ports 6.7b und 26.7c mit "Signall" als auch die Bezeichner, die den Ports direkt in der Hierarchie übergeordneten Hierarchieelementen 5.3b und 25.3c "PDU1" und somit auf gleicher Hierarchiestufe befindlichen Hierarchieelemente übereinstimmen als auch die beiden Bezeichner der den Hierarchieelementen 5.3b und 25.3c direkt in der Hierarchie übergeordneten Hierarchieelementen 4.2b und 24.2c "ECU2" auf gleicher Hierarchiestufe übereinstimmen.

Figur 7 zeigt eine Beispieltabelle, in welcher die Anzahl der Übereinstimmungen bezogen auf das Beispiel in Figur 4 mit der Auswahl des Hierarchieelements 25.3c "PDU1" und somit der Ports 26.7c und 26.8c als erste Menge von Ports und der Auswahl des Hierarchieelements 3b "Gruppe" und somit aller Ports der Modellkomponente 55b als zweiter Menge von Ports ausgewählt wurde.

Aus der Beispieltabelle in Figur 7 wird ersichtlich, dass bei einer vorgegebenen Anzahl der Übereinstimmungen von vier keine mögliche Zuordnung gefunden wird, da auf dieser Hierarchiestufe die Bezeichner "Gruppe" und "Interface" verschieden sind.

In einer weiteren Ausführungsform ist es möglich, dass es Hierarchiestufen gibt, die bei einem Vergleich der Bezeichner der Hierarchiestufen ignoriert werden sollen. So ist beispielsweise das Hierarchieelement 3 "Gruppe" der Modellkomponente 55b in Figur 4 eine strukturelle Ebene, die ggf. lediglich der Übersichtlichkeit dient, aber technisch keine Relevanz hat. So ist es in dieser Ausführungsform gewünscht, dass vom System erkannt werden sollte, dass die Ports 6.7b und 26.7c ohne das Hierarchieelement 3b zu berücksichtigen bis zu einer Anzahl an Übereinstimmungen von vier, also auch bis zum Hierarchieelement 2b bzw. 22c "Interface" übereinstimmen. Dazu wird in dieser Ausführungsform ermöglicht Hierarchieelemente von einer Überprüfung auf Übereinstimmung auszunehmen. Im Beispiel anhand von Figur 8, basierend auf Figur 4, könnte also das Hierarchieelement 3b "Gruppe" von der Überprüfung ausgenommen werden, so dass das Hierarchieelement 2b "Interface" den Hierarchieelementen 4.1b und 4.2b übergeordnet ist und für die Ports 6.7b und 26.7c sowie 6.8b und 26.8c eine Anzahl an Übereinstimmungen von vier erkannt würde. In diesem Beispiel wird das Hierarchieelement "Gruppe" ausgenommen, wodurch eine identische übergeordnete Hierarchie für die Ports 6.7b und 26.7c sowie 6.8b und 26.8c erhalten wird. Ebenso könnte ein anderes Hierarchieelement von der Überprüfung ausgenommen werden, so dass trotz des Ausnehmens eines Hierarchieelements unterschiedliche übergeordnete Hierarchien .

In einer weiteren Ausführungsform kann festgelegt werden, welche Bezeichner als gleich bewertet werden sollen. In Figur 9 ist dargestellt, dass die Bezeichner der Ports 26.7d, ... 26.10d und eines Hierarchieelements 24.2d der ersten Modellkomponente 75d einen anderen Bezeichner ("Steuergerät2", "Signal_1", "Signal_2" usw.) haben als die Bezeichner der Ports und der Hierarchieelemente der zweiten Modellkomponenten 55b ("ECU2", "Signal1", "Signal2" usw.), obwohl lediglich ein Synonym bzw. eine andere Schreibweise verwendet wurden und eigentlich die gleichen Bezeichner gemeint sind. Dieses Szenario kann zum Beispiel dann entstehen, wenn die Modellkomponenten von unterschiedlichen Personen erstellt werden. Um trotzdem eine automatische Zuordnung zu ermöglichen, kann in einer bevorzugten Ausführungsform beispielsweise tabellarisch festgelegt werden, welche Bezeichner bzw. Teile von Bezeichnern trotz Abweichung als übereinstimmend bewertet werden sollen. In dem Beispiel zu Figur 9 wäre eine solche Festlegung, dass "Signall" und "Signal_1", "Signal2" und "Signal_2", "Signal5" und "Signal_5" sowie "ECU2" und "Steuergerät2" als übereinstimmend bewertet werden sollen, so dass auch in dieser Ausführungsform eine mögliche Zuordnung 41 d bei einer vorgegebenen Anzahl der Übereinstimmungen von drei erkannt wird und automatisch verbunden wird.

Ebenso kann festgelegt werden, dass Teile eines Bezeichners trotz einer Abweichung als übereinstimmend bewertet werden sollten, beispielsweise wenn ECU bzw. Steuergerät innerhalb eines Bezeichners auftreten oder das Suffix "_IN" soll gleichgesetzt werden mit dem Suffix "_OUT". Beispielhaft wird ein solcher Fall in Figur 10 gezeigt. Anhand einer Regel wird in diesem Beispiel entweder festgelegt, dass die Suffixe "_IN" und "_OUT" bei den Ports 6.7e, 6.8e bzw. 26.7e, 26.8e ignoriert werden sollen oder dass für die Bezeichner der Ports der ersten Menge oder der zweite Menge das Suffix "_IN" einem "_OUT" und das Suffix "_OUT" einem "_IN" entsprechen soll, so dass immer ein Eingangsport ("_IN") mit einem Ausgangsport ("_OUT") verbunden wird.

In einer anderen Ausführungsform werden Bezeichner oder Teile von Bezeichnern, welche unterschiedlich sind, aber als gleich bewertet werden sollen vor der Ausführung des Verfahrens durch eine Suchen-Ersetzen-Funktion vereinheitlicht.

In einer bevorzugten Ausführungsform sollen nicht nur basierend auf einer Mindestübereinstimmung zwei Ports verbunden werden, sondern eine Zuordnung mit möglichst großer Übereinstimmung gefunden werden, deren Ports anschließend verbunden werden. Dafür wird erfindungsgemäß für einen ersten Port der ersten Menge und jeden Port der zweiten Menge eine mögliche Zuordnung geprüft. Anhand einer vorgebbaren ersten Strategie wird dann eine Zuordnung aus der Menge aller als mögliche Zuordnungen erkannten Zuordnungen des ersten Ports der ersten Menge mit einem Port der zweiten Menge ausgewählt und der erste Port der ersten Menge entsprechend der ausgewählten Zuordnung mit einem Port der zweiten Menge verbunden wird.

In einer bevorzugten Ausführungsform wird zu jeder möglichen Zuordnung geprüft bis zu welcher Hierarchiestufe die Bezeichner für den ersten Port und den zweiten Port, sowie entsprechend der Hierarchie aufsteigend vom ersten Port und zweiten Port aus die Bezeichner der Hierarchieelemente, die dem ersten Port und dem zweiten Port übergeordnet sind, jeweils auf einer gleichen Hierarchiestufe übereinstimmen oder als übereinstimmend bewertet werden. Die vorgebbare erste Strategie sieht beispielsweise vor, diejenige Zuordnung auszuwählen, bei welcher die Anzahl an Übereinstimmungen der Bezeichner in der Hierarchie aufsteigend ausgehend von dem ersten Port und dem zweiten Port am höchsten ist. Dadurch wird erreicht, dass die Zuordnung zwar eine Mindestanzahl von Übereinstimmungen erfüllt, aber unter allen möglichen Zuordnungen, welche diese Mindestanzahl von Übereinstimmungen erfüllen wird diejenige gewählt, welche die höchste und somit maximale Anzahl an Übereinstimmungen aufweist.

Diese Ausführungsform wird beispielhaft im Ablaufdiagram Figur 11 verdeutlicht. Gleiche Bezugszeichen wie in vorangehenden Figuren bedeuten gleiche Verfahrensschritte. Wird im Verfahrensschritt 150 erkannt, dass die Mindestanzahl erreicht wurde, werden der erste Port und der geprüfte Port der zweiten Menge als mögliche Zuordnung in einem Verfahrensschritt 155 gespeichert, bevor Verfahrensschritt 181 erfolgt.

Wird im Verfahrensschritt 181 festgestellt, dass einer der beiden zuletzt geprüften Ports bzw. Hierarchieelemente kein übergeordnetes Hierarchieelement aufweist, wird in einem Verfahrensschritt 185 geprüft, ob die Zuordnung der beiden zu prüfenden Ports eine mögliche Zuordnung ist, also ob die beiden zu prüfenden Ports im Verfahrensschritt 155 als mögliche Zuordnung gespeichert wurden.

Ist die Zuordnung keine mögliche Zuordnung, so wird Verfahrensschritt 210 ausgeführt, also geprüft, ob es in der zweiten Menge von Ports noch einen weiteren, noch nicht auf Übereinstimmung mit dem ersten Port geprüften Port in der zweiten Menge gibt.

Ist die Zuordnung eine mögliche Zuordnung, wird in einem Verfahrensschritt 191 zusätzlich zur möglichen Zuordnung die Anzahl der Übereinstimmungen gespeichert. Anschließend wird ebenfalls Verfahrensschritt 210 ausgeführt.

Im Verfahrensschritt 210 wird geprüft, ob es noch einen weiteren, noch nicht auf Übereinstimmung mit dem ersten Port geprüften Port in der zweiten Menge gibt. Ist dies der Fall, dann wird dieser Port in einem Verfahrensschritt 220 als Port der zweiten Menge ausgewählt und die Prüfung des ersten Ports der ersten Menge erfolgt nun in Hinblick auf diesen in Verfahrensschritt 220 ausgewählten Port der zweiten Menge beginnend mit dem Verfahrensschritt 130.

Wird im Verfahrensschritt 210 festgestellt, dass es keinen noch nicht auf Übereinstimmung mit dem ersten Port geprüften Port in der zweiten Menge mehr gibt, so wird nach einer ersten Strategie eine mögliche Zuordnung in einem Verfahrensschritt 250 ausgewählt und in einem Verfahrensschritt 260 werden die beiden zur ausgewählten Zuordnung gehörenden Ports automatisch verbunden. Anschließend endet das Verfahren 300.

Für die Auswahl nach der ersten Strategie gibt es verschiedene Möglichkeiten. Beispielsweise wird wie in Figur 7 eine Tabelle angelegt werden, bzw. die möglichen Zuordnungen und ihre Anzahl der Übereinstimmungen gespeichert und anschließend diejenige Zuordnung mit der höchsten Anzahl an Übereinstimmungen ausgewählt.

Alternativ werden nicht alle möglichen Zuordnungen und ihre Anzahl an Übereinstimmungen gespeichert, sondern nur diejenige Zuordnung mit der höchsten Anzahl an Übereinstimmungen, so dass nach jeder Prüfung des ersten Ports der ersten Menge mit einem Port der zweiten Menge auf Übereinstimmung verglichen wird, ob es schon eine Zuordnung mit größerer Anzahl von Übereinstimmungen gibt und nur diejenige Zuordnung mit der höchsten Anzahl an Übereinstimmungen gespeichert und nach Überprüfung aller Ports der zweiten Menge auf Übereinstimmung mit dem ersten Port ausgewählt und automatisch verbunden wird.

In einer anderen Ausführungsform wird in einer Matrix berechnet, welche Übereinstimmung jeweils zwischen den Ports der ersten Menge und den Ports der zweiten Menge gegeben sind. Anhand dieser Matrix werden die beiden Ports mit der höchsten Anzahl an Übereinstimmungen gefunden und verbunden, anschließend die Ports mit der nächst höchsten Anzahl an Übereinstimmungen usw. Dabei wird darauf geachtet, dass die Mindestanzahl an Übereinstimmungen gegeben ist. Hierfür ist ein Beispiel in Figur 12 dargestellt, dass sich auf Figur 3 bezieht. Als erste Menge von Ports wurde das Interface 2b ausgewählt. Die entsprechenden Ports sind in der ersten Spalte von Figur 12 aufgeführt. Als zweite Menge von Ports wurde das Hierarechieelement 24.2c "ECU2" ausgewählt. Die entsprechenden Ports sind in der ersten Zeile von Figur 12 aufgeführt. Nun kann anhand der Tabelle in Figur 12 durch einen Eintrag in der Zeile eines Ports der ersten Menge und der entsprechenden Spalte eines Ports der zweiten Menge erkannt werden, wie lang die höchste Anzahl an Übereinstimmungen zwischen diesen beiden Ports ist.

Ein beispielhaftes Ablaufdiagramm wie eine erste Menge von Ports und eine zweite Menge von Ports bezüglich einer automatischen Zuordnung geprüft werden kann, ist in Figur 13 dargestellt. Im Unterschied zu Figur 11 wird im dem Fall, dass im Verfahrensschritt 210 festgestellt wurde, dass es keinen noch nicht auf Übereinstimmung mit dem ersten Port geprüften Port in der zweiten Menge mehr gibt, in einem Verfahrensschritt 230 geprüft, ob es noch einen Port in der ersten Menge von Ports gibt, der noch nicht auf mögliche Zuordnungen mit Ports der zweiten Menge geprüft wurde.

Falls dies der Fall ist, wird in einem Verfahrensschritt 240 dieser Port der ersten Menge von Ports, der noch nicht auf mögliche Zuordnungen mit Ports der zweiten Menge geprüft wurde als neuer Port der ersten Menge ausgewählt und die Prüfung des ersten Ports der ersten Menge mit den Ports der zweiten Menge erfolgt nun in Hinblick auf diesen in Verfahrensschritt 240 ausgewählten Port der ersten Menge beginnend mit dem Verfahrensschritt 130.

Gibt es keinen Port der ersten Menge von Ports, der noch nicht auf mögliche Zuordnungen mit Ports der zweiten Menge geprüft wurde, so wird eine mögliche Zuordnung anhand einer ersten Strategie in einem Verfahrensschritt 250 ausgewählt und in einem Verfahrensschritt 260 werden die beiden zur ausgewählten Zuordnung gehörenden Ports automatisch verbunden. Anschließend endet das Verfahren 300. In einer weiteren Ausführungsform ist mittels einer zweiten Strategie vorgebbar, wie mit zwei möglichen Zuordnungen zu einem Port verfahren werden soll, welche beide die höchste Anzahl an Übereinstimmungen aufweisen. Ein solcher Fall ist in Figur 14 dargestellt, wobei in diesem Beispiel die Bezeichner der Hierarchieelemente 5.1b, 5.3b und 25.3f identisch sind. Wenn beispielsweise Signal 26.7f als erste Menge von Ports ausgewählt wurde und die Hierarchieelemente ECU1" 4.1b und "ECU2" 4.2b und damit die zugehörigen Ports 6.1b, ...6.10b als zweite Menge von Ports ausgewählt wurden, sind sowohl die Zuordnung 41f als auch die Zuordnung 42f mögliche Zuordnungen mit der höchsten Anzahl an Übereinstimmungen von zwei. Andere mögliche Zuordnungen haben eine geringere Anzahl an Übereinstimmungen.

In einer Ausführungsform kann ein Port mit mehreren anderen Ports verbunden werden. Beispielsweise besteht die zweite Strategie darin, alle möglichen Zuordnungen oder alle möglichen Zuordnungen mit einer höchsten Anzahl an Übereinstimmungen auszuwählen und die zugehörigen Ports zu verbinden, so dass ein Port der ersten Menge mit allen Ports mit der höchsten Anzahl an Übereinstimmungen verbunden wird. In Figur 14 würden nach der zweiten Strategie alle möglichen Zuordnungen mit einer höchsten Anzahl an Übereinstimmungen auszuwählen sowohl die Zuordnung 41f, also Ports 26.7f mit Port 6.7b als auch die Zuordnung 42f, also Port 26.7f mit Port 6.1b verbunden.

In einer bevorzugten Ausführungsform wird bei mehrfachem Verbinden eines Ports mit anderen Ports eine automatische Rückmeldung an den Benutzer erzeugt, beispielsweise in Form einer Warnung oder einer Fehlermeldung.

In anderen Ausführungsformen wird im Falle mehrerer Zuordnungen mit höchster Anzahl an Übereinstimmungen keine Zuordnung ausgewählt.

In einer bevorzugten Ausführungsform bleiben Ports, die bereits vor der Auswahl der ersten Menge von Ports und der zweiten Menge von Ports verbunden waren, bei der Prüfung auf eine mögliche Zuordnung unberücksichtigt. So kann gewährleistet werden, dass Verbindungen, die der Benutzer bereits gezogen hat, bestehen bleiben und nur die noch unverbundenen Ports mittels des erfindungsgemäßen Verfahrens verbunden werden.

In einer weiteren Ausführungsform können zusätzliche Regeln definiert werden, welche bzgl. einer möglichen Zuordnung und einer automatischen Verbindung berücksichtigt werden müssen. Wie im Folgenden erläutert, könnte eine solche Regel beispielsweise vorsehen, dass nur ein Ausgangsport mit einem Eingangsport verbunden wird oder die Kompatibilität von Datentypen berücksichtigt wird.

In einer bevorzugten Ausführungsform ist ein Port entweder ein Eingangsport oder ein Ausgangsport. Eingangsport bedeutet, dass eine Modellkomponente über diesen Port ein Signal oder ein oder mehrere Daten von einer anderen Modellkomponente erhält. Umgekehrt bedeutet Ausgangsport, dass ein Signal oder ein oder mehrere Daten von einer Modellkomponenten an eine andere Modellkomponente übergeben bzw. übertragen werden. Ist ein Port entweder ein Eingangsport oder ein Ausgangsport, so wird in dieser Ausführungsform eine mögliche Zuordnung nur zwischen einem Eingangsport und einem Ausgangsport erkannt. Figur 15 zeigt das Beispiel aus Figur 14 unter Berücksichtigung der Eingangsports 6.2b, 6.3b, 6.5b, 6.6b, 6.7b, 6.8b, 6.9b, 6.10b und Ausgangsports 6.1b, 6.4b, 26.7f, 26.8f, 26.9f, 26.10f. Unter der Berücksichtigung, dass ein Eingangsport nur mit einem Ausgangsport verbunden werden darf bzw. ein Ausgangsport nur mit einem Eingangsport verbunden werden darf, gibt es zwischen dem Port 26.7f und dem Port 6.1b keine mögliche Zuordnung, da in diesem Fall ein Ausgangsport 26.7f mit einem Ausgangsport 6.1b verbunden würde. Nur die Zuordnungen 41f, 43f, 44f sind mögliche Zuordnungen, von denen die Zuordnung 41f die höchste Anzahl der Übereinstimmungen aufweist und somit in einer bevorzugten Ausführungsform ausgewählt und automatisch verbunden würde.

In einer weiteren Ausführungsform ist ein Port entweder ein Eingangsport oder ein Ausgangsport oder ein bidirektionaler Port. Über eine Regel wird festgelegt, dass ein Eingangsport mit einem Ausgangsport oder einem bidirektionalen Port verbunden wird, ein Ausgangsport mit einem Eingangsport oder einem bidirektionalen Port und ein bidirektionaler Port mit einem Eingangsport oder einem Ausgangsport oder einem bidirektionalen Port. Diese Regel wird dann bei der Prüfung auf eine mögliche Zuordnung berücksichtigt, so dass ein Port nur entsprechend der Regel mit einem oder mehreren Ports automatisch verbunden wird.

In einer weiteren Ausführungsform ist ein Port ebenfalls entweder ein Eingangsport oder ein Ausgangsport oder ein bidirektionaler Port. Über eine Regel wird festgelegt, dass ein Eingangsport mit einem Ausgangsport, ein Ausgangsport mit einem Eingangsport und ein bidirektionaler Port mit einem bidirektionalen Port.

In einer weiteren Ausführungsform ist einem Ausgangsport ein Datentyp zugeordnet, so dass dieser Ausgangsport nur Daten von diesem Datentyp übermittelt und sind einem Eingangsport eine Menge von Datentypen zugeordnet, die von diesem Port verarbeitet werden können. Insbesondere gehören zur Menge von Datentypen, welche vom Eingangsport verarbeitet werden können, auch Datentypen, die mit Hilfe einer Typumwandlung zu einem passenden Datentyp umgewandelt werden. Eine mögliche Zuordnung wird nur erkannt oder eine Verbindung zwischen einem Eingangsport und einem Ausgangsport nur dann automatisch gezogen, wenn der Eingangsport den Datentyp des Ausgangsport verarbeiten kann.

Wenn beispielsweise der Ausgangsport 26.7 ein Datum vom Datentyp 16 Bit Signed Integer ausgibt und der Eingangsport 6.7 kann Daten vom Datentyp 16 Bit Signed Integer, 32 Bit Signed Integer oder Double-precision floating-point formatverarbeiten, ist die Zuordnung 42 eine mögliche Zuordnung.

Kann beispielsweise jedoch der Eingangsport 6.7 nur ein skalaren Wert verarbeiten, der Ausgangsport übergibt aber ein Array der Länge 3, dann wird keine mögliche Zuordnung erkannt, sondern beispielsweise geprüft, ob die Eingangsports 6.5 oder 6.9 ein Array der Länge 3 verarbeiten können und somit mögliche Zuordnungen sind.

## Patentansprüche

1. Verfahren zum automatischen Verbinden von Modellkomponenten (50, 55, 75) eines Modells eines technischen Systems auf einem Computer mit einer Anzeige,
wobei das Modell eine erste Modellkomponente (75) und eine zweite Modellkomponente (55) aufweist,
wobei die erste Modellkomponente (75) und die zweite Modellkomponente (55) jeweils mindestens ein Hierarchieelement (2, 3, 4. 5, 22, 23, 24, 25) aufweisen,
wobei ein Hierarchieelement (2, 3, 4. 5, 22, 23, 24, 25) kein Hierarchieelement (2, 3, 4. 5, 22, 23, 24, 25) oder ein Hierarchieelement (2, 3, 4. 5, 22, 23, 24, 25) oder mehrere Hierarchieelemente (2, 3, 4. 5, 22, 23, 24, 25) enthält,
wobei ein Hierarchieelement keinen Port (6, 26) oder einen Port (6, 26) oder mehrere Ports (6, 26) aufweist,
wobei ein Hierarchieelement (2, 3, 4. 5, 22, 23, 24, 25) und ein Port (6, 26) einen Bezeichner aufweisen,
wobei eine Verbindung zwischen zwei Ports (6, 26) eine Zuordnung im technischen System darstellt,
wobei durch eine grafische Benutzeraktion eine erste Menge von Hierarchieelementen (2, 3, 4. 5, 22, 23, 24, 25) und / oder Ports (6, 26) und eine zweite Menge von Hierarchieelementen (2, 3, 4. 5, 22, 23, 24, 25) und / oder Ports (6, 26) ausgewählt wird,
**dadurch gekennzeichnet,**
**dass** für einen ersten Port (26.7, 26.8) der ersten Menge und einen zweiten Port (6) der zweiten Menge eine mögliche Zuordnung (41-44) geprüft wird,
wobei eine mögliche Zuordnung (41-44) dann gegeben ist, wenn für den ersten Port (26.7, 26.8) und den zweiten Port (6), sowie entsprechend der Hierarchie aufsteigend von dem ersten Port (26.7, 26.8) und dem zweiten Port (6) aus die Bezeichner der Hierarchieelemente (2, 3, 4. 5, 22, 23, 24, 25), die dem ersten Port (26.7, 26.8) und dem zweiten Port (6) übergeordnet sind, jeweils auf einer ausgehend vom Port (6, 26) gleichen Hierarchiestufe bis zu einer vorgebbaren Anzahl von Hierarchiestufen übereinstimmen oder gemäß einer vorgegebenen Regel als übereinstimmend bewertet werden,
und bei Vorliegen einer möglichen Zuordnung (41-44) der erste Port (26.7, 26.8) der ersten Menge automatisch mit dem zweiten Port (6) der zweiten Menge verbunden wird oder
für einen ersten Port (26.7, 26.8) der ersten Menge und jeden Port (6) der zweiten Menge eine mögliche Zuordnung (41-44) geprüft wird und
anhand einer vorgebbaren ersten Strategie eine Zuordnung (41-44) aus der Menge aller als mögliche Zuordnungen erkannten Zuordnungen (41-44) des ersten Ports der ersten Menge mit einem Port (6) der zweiten Menge ausgewählt wird und der erste Port (26.7, 26.8) der ersten Menge entsprechend der ausgewählten Zuordnung (41, 42) mit einem Port (6) der zweiten Menge verbunden wird.

2. Verfahren nach Anspruch 1, **dadurch gekennzeichnet, dass** zu jeder möglichen Zuordnung (41-44) geprüft wird bis zu welcher Hierarchiestufe die Bezeichner für den ersten Port (26.7, 26.8) und den zweiten Port (6), sowie entsprechend der Hierarchie aufsteigend vom ersten Port (26.7, 26.8) und zweiten Port (6) aus die Bezeichner der Hierarchieelemente (2, 3, 4. 5, 22, 23, 24, 25), die dem ersten Port (26.7, 26.8) und dem zweiten Port (6) übergeordnet sind, jeweils auf einer ausgehend vom Port gleichen Hierarchiestufe übereinstimmen oder als übereinstimmend bewertet werden und die vorgebbare erste Strategie vorsieht, diejenige Zuordnung (41-44) auszuwählen, bei welcher die Anzahl an Übereinstimmungen der Bezeichner in der Hierarchie ausgehend von dem ersten Port (26.7, 26.8) und dem zweiten Port (6) am höchsten ist.

3. Verfahren nach einem der vorangehenden Ansprüche, wobei ein Port (6, 26) mehrfach verbunden werden kann.

4. Verfahren Anspruch 3, **dadurch gekennzeichnet, dass** mittels einer zweiten Strategie vorgebbar ist, wie mit zwei möglichen Zuordnungen (41-44) zu einem Port (6, 26) verfahren werden soll, welche beide die höchste Anzahl an Übereinstimmungen aufweisen.

5. Verfahren nach Anspruch 4, **dadurch gekennzeichnet, dass** die zweite Strategie darin besteht, keine Zuordnung (41-44) auszuwählen, alle Zuordnungen (41-44) auszuwählen, bei denen die Anzahl der Übereinstimmungen gleich ist, oder nur die erste Zuordnung (41-44) mit höchster Anzahl an Übereinstimmungen auszuwählen.

6. Verfahren nach einem der vorangehenden Ansprüche, **dadurch gekennzeichnet, dass** Ports (6, 26), die bereits vor der Auswahl der ersten Menge von Ports (26.7, 26.8) und der zweiten Menge von Ports (6) verbunden waren, bei der Prüfung auf eine mögliche Zuordnung (41-44) unberücksichtigt bleiben.

7. Verfahren nach einem der vorangehenden Ansprüche, **dadurch gekennzeichnet, dass** ein dem ersten Port (26.7, 26.8) und/oder dem zweiten Port (6) übergeordnetes Hierarchieelement (2, 3, 4. 5, 22, 23, 24, 25) von der Überprüfung der Bezeichner auf gleicher Hierarchiestufe ausgenommen werden kann.

8. Verfahren nach einem der vorangehenden Ansprüche, **dadurch gekennzeichnet, dass** ein Port (6, 26) entweder ein Eingangsport (6.2, 6.3, 6.5-6.10) oder ein Ausgangsport (6.1, 6.4, 26) ist und eine mögliche Zuordnung (41-44) nur zwischen einem Eingangsport (6.2, 6.3, 6.5-6.10) und einem Ausgangsport (6.1, 6.4, 26) erkannt wird.

9. Verfahren nach Anspruch 8, **dadurch gekennzeichnet, dass** einem Ausgangsport (6.1, 6.4, 26) ein Datentyp zugeordnet ist und einem Eingangsport (6.2, 6.3, 6.5-6.10) eine Menge von Datentypen zugeordnet ist, die von diesem Port (6.2, 6.3, 6.5-6.10) verarbeitet werden können, wobei eine mögliche Zuordnung zwischen einem Eingangsport (6.2, 6.3, 6.5-6.10) und einem Ausgangsport (6.1, 6.4, 26) nur erkannt wird, wenn der Eingangsport (6.2, 6.3, 6.5-6.10) den Datentyp des Ausgangsport (6.1, 6.4, 26) verarbeiten kann.

## Geänderte Patentansprüche

### Geänderte Patentansprüche gemäss Regel 137(2) EPÜ.

1. Verfahren zum automatischen Verbinden von Modellkomponenten (50, 55, 75) eines Modells eines technischen Systems auf einem Computer mit einer Anzeige,
wobei das Modell eine erste Modellkomponente (75) und eine zweite Modellkomponente (55) aufweist,
wobei die erste Modellkomponente (75) und die zweite Modellkomponente (55) jeweils mindestens ein Hierarchieelement (2, 3, 4. 5, 22, 23, 24, 25) und jeweils mindestens einen Port (6, 26) aufweisen,
wobei ein Hierarchieelement (2, 3, 4. 5, 22, 23, 24, 25) kein Hierarchieelement (2, 3, 4. 5, 22, 23, 24, 25) oder ein Hierarchieelement (2, 3, 4. 5, 22, 23, 24, 25) oder mehrere Hierarchieelemente (2, 3, 4. 5, 22, 23, 24, 25) enthält,
wobei ein Hierarchieelement keinen Port (6, 26) oder einen Port (6, 26) oder mehrere Ports (6, 26) aufweist,
wobei ein Hierarchieelement (2, 3, 4. 5, 22, 23, 24, 25) und ein Port (6, 26) einen Bezeichner aufweisen,
wobei eine Verbindung zwischen zwei Ports (6, 26) eine Zuordnung im technischen System darstellt,
wobei durch eine grafische Benutzeraktion eine erste Menge von Hierarchieelementen (2, 3, 4. 5, 22, 23, 24, 25) und / oder Ports (6, 26) und eine zweite Menge von Hierarchieelementen (2, 3, 4. 5, 22, 23, 24, 25) und / oder Ports (6, 26) ausgewählt wird,
**dadurch gekennzeichnet,**
**dass** für einen ersten Port (26.7, 26.8) der ersten Menge und einen zweiten Port (6) der zweiten Menge eine mögliche Zuordnung (41-44) geprüft wird,
wobei eine mögliche Zuordnung (41-44) dann gegeben ist, wenn für den ersten Port (26.7, 26.8) und den zweiten Port (6) die Bezeichner übereinstimmen, sowie entsprechend der Hierarchie aufsteigend von dem ersten Port (26.7, 26.8) und dem zweiten Port (6) aus die Bezeichner der Hierarchieelemente (2, 3, 4. 5, 22, 23, 24, 25), die dem ersten Port (26.7, 26.8) und dem zweiten Port (6) übergeordnet sind, jeweils auf einer ausgehend vom Port (6, 26) gleichen Hierarchiestufe bis zu einer vorgebbaren Anzahl von Hierarchiestufen übereinstimmen oder gemäß einer vorgegebenen Regel als übereinstimmend bewertet werden,
und bei Vorliegen einer möglichen Zuordnung (41-44) der erste Port (26.7, 26.8) der ersten Menge automatisch mit dem zweiten Port (6) der zweiten Menge verbunden wird oder
für einen ersten Port (26.7, 26.8) der ersten Menge und jeden Port (6) der zweiten Menge eine mögliche Zuordnung (41-44) geprüft wird, wobei eine mögliche Zuordnung (41-44) dann gegeben ist, wenn für den ersten Port (26.7, 26.8) und den zweiten Port (6) die Bezeichner übereinstimmen, sowie entsprechend der Hierarchie aufsteigend von dem ersten Port (26.7, 26.8) und dem zweiten Port (6) aus die Bezeichner der Hierarchieelemente (2, 3, 4. 5, 22, 23, 24, 25), die dem ersten Port (26.7, 26.8) und dem zweiten Port (6) übergeordnet sind, jeweils auf einer ausgehend vom Port (6, 26) gleichen Hierarchiestufe bis zu einer vorgebbaren Anzahl von Hierarchiestufen übereinstimmen oder gemäß einer vorgegebenen Regel als übereinstimmend bewertet werden und
anhand einer vorgebbaren ersten Strategie eine Zuordnung (41-44) aus der Menge aller als mögliche Zuordnungen erkannten Zuordnungen (41-44) des ersten Ports der ersten Menge mit einem Port (6) der zweiten Menge ausgewählt wird und der erste Port (26.7, 26.8) der ersten Menge entsprechend der ausgewählten Zuordnung (41, 42) mit einem Port (6) der zweiten Menge verbunden wird.

2. Verfahren nach Anspruch 1, **dadurch gekennzeichnet, dass** zu jeder möglichen Zuordnung (41-44) geprüft wird bis zu welcher Hierarchiestufe die Bezeichner für den ersten Port (26.7, 26.8) und den zweiten Port (6), sowie entsprechend der Hierarchie aufsteigend vom ersten Port (26.7, 26.8) und zweiten Port (6) aus die Bezeichner der Hierarchieelemente (2, 3, 4. 5, 22, 23, 24, 25), die dem ersten Port (26.7, 26.8) und dem zweiten Port (6) übergeordnet sind, jeweils auf einer ausgehend vom Port gleichen Hierarchiestufe übereinstimmen oder als übereinstimmend bewertet werden und die vorgebbare erste Strategie vorsieht, diejenige Zuordnung (41-44) auszuwählen, bei welcher die Anzahl an Übereinstimmungen der Bezeichner in der Hierarchie ausgehend von dem ersten Port (26.7, 26.8) und dem zweiten Port (6) am höchsten ist.

3. Verfahren nach einem der vorangehenden Ansprüche, wobei ein Port (6, 26) mehrfach verbunden werden kann.

4. Verfahren Anspruch 3, **dadurch gekennzeichnet, dass** mittels einer zweiten Strategie vorgebbar ist, wie mit zwei möglichen Zuordnungen (41-44) zu einem Port (6, 26) verfahren werden soll, welche beide die höchste Anzahl an Übereinstimmungen aufweisen.

5. Verfahren nach Anspruch 4, **dadurch gekennzeichnet, dass** die zweite Strategie darin besteht, keine Zuordnung (41-44) auszuwählen, alle Zuordnungen (41-44) auszuwählen, bei denen die Anzahl der Übereinstimmungen gleich ist, oder nur die erste Zuordnung (41-44) mit höchster Anzahl an Übereinstimmungen auszuwählen.

6. Verfahren nach einem der vorangehenden Ansprüche, **dadurch gekennzeichnet, dass** Ports (6, 26), die bereits vor der Auswahl der ersten Menge von Ports (26.7, 26.8) und der zweiten Menge von Ports (6) verbunden waren, bei der Prüfung auf eine mögliche Zuordnung (41-44) unberücksichtigt bleiben.

7. Verfahren nach einem der vorangehenden Ansprüche, **dadurch gekennzeichnet, dass** ein dem ersten Port (26.7, 26.8) und/oder dem zweiten Port (6) übergeordnetes Hierarchieelement (2, 3, 4. 5, 22, 23, 24, 25) von der Überprüfung der Bezeichner auf gleicher Hierarchiestufe ausgenommen werden kann.

8. Verfahren nach einem der vorangehenden Ansprüche, **dadurch gekennzeichnet, dass** ein Port (6, 26) entweder ein Eingangsport (6.2, 6.3, 6.5-6.10) oder ein Ausgangsport (6.1, 6.4, 26) ist und eine mögliche Zuordnung (41-44) nur zwischen einem Eingangsport (6.2, 6.3, 6.5-6.10) und einem Ausgangsport (6.1, 6.4, 26) erkannt wird.

9. Verfahren nach Anspruch 8, **dadurch gekennzeichnet, dass** einem Ausgangsport (6.1, 6.4, 26) ein Datentyp zugeordnet ist und einem Eingangsport (6.2, 6.3, 6.5-6.10) eine Menge von Datentypen zugeordnet ist, die von diesem Port (6.2, 6.3, 6.5-6.10) verarbeitet werden können, wobei eine mögliche Zuordnung zwischen einem Eingangsport (6.2, 6.3, 6.5-6.10) und einem Ausgangsport (6.1, 6.4, 26) nur erkannt wird, wenn der Eingangsport (6.2, 6.3, 6.5-6.10) den Datentyp des Ausgangsport (6.1, 6.4, 26) verarbeiten kann.
